# EUROPEAN PATENT SPECIFICATION

(11) **EP 4 394 288 B1**
(45) Date of publication and mention of the grant of the patent: **29.04.2026**
(21) Application number: 21962437.6
(22) Date of filing: 28.10.2021
(51) Int. Cl.: F25D 11/00, F25D 19/00, H05K 7/20, B60H 1/00, B60H 1/32

(54) **TRANSPORT REFRIGERATION UNIT**
TRANSPORTKÜHLEINHEIT
UNITÉ DE RÉFRIGÉRATION DE TRANSPORT

(43) Date of publication of application: 03.07.2024
(73) Proprietor: MITSUBISHI HEAVY INDUSTRIES THERMAL SYSTEMS, LTD., Tokyo 100-8332 (JP)
(72) Inventor: MATSUMOTO Kyohei, Tokyo 100-8332 (JP); JINNO Hiroki, Tokyo 100-8332 (JP); DHARAMSHI Kewal, Tokyo 100-8332 (JP); PIAO Hailong, Tokyo 100-8332 (JP); KOMORIYA Taiki, Tokyo 100-8332 (JP)
(74) Representative: Cabinet Beau de Loménie
(86) International application number: PCT/JP2021/039914
(87) International publication number: WO 2023/073891

(56) References cited:
- WO-A1-2012/014470
- CN-A- 102 449 414
- JP-A- 2016 211 788
- JP-A- H06 112 382

## Description

### Technical Field

The present disclosure relates to a transport refrigeration unit.

### Background Art

PTL 1 discloses a transport cooling unit (transport refrigeration unit) mounted on a vehicle. The transport cooling unit includes a control box (electric box) which internally accommodates a control device for controlling a refrigeration unit. A lower surface of the control box is provided with a heat sink including a heat radiating fin (fin) for radiating heat from the control device. An air guide path is formed along the heat radiating fin to guide outside air to the heat radiating fin. An intake port of the air guide path is located in a rear end of the control box, and a discharge port of the air guide path is located in front of the control box. Therefore, air is introduced from a side with respect to the heat sink. Document WO2012/014470 discloses another example of known transport refrigeration unit.

### Citation List

### Patent Literature

[PTL 1] Japanese Unexamined Patent Application Publication No. 2017-227352

### Summary of Invention

### Technical Problem

However, in the transport refrigeration unit disclosed in PTL 1, whereas fresh air is supplied to a portion on an upstream side of the heat sink, air warmed after passing through the upstream side is supplied to a portion on a downstream side of the heat sink. Therefore, in some cases, a portion to be cooled most cannot be efficiently cooled, and there is room for improvement in terms of improving cooling performance of the electric box.

The present invention is made to solve the above-described problems, and an object of the present invention is to provide a transport refrigeration unit which can improve cooling performance of an electric box. Solution to Problem

In order to solve the above-described problems, a transport refrigeration unit according to the present invention is defined in claim 1 and includes a casing, an electric box provided inside the casing and accommodating an electric component, and a heat sink including a cooling plate provided along a cooling target surface of the electric box, and a plurality of fins arranged to protrude from the cooling plate and to extend along the cooling plate. The casing includes a cooling intake port that is provided to face the cooling target surface and to interpose the heat sink together with the cooling target surface, and that introduces air into the casing.

### Advantageous Effects of Invention

According to the transport refrigeration unit of the present invention, cooling performance of an electric box can be improved.

### Brief Description of Drawings

Fig. 1 is a perspective view illustrating a schematic configuration of a refrigerated vehicle including a transport refrigeration unit according to a first embodiment of the present disclosure.
Fig. 2 is a perspective view of a refrigeration unit body according to the first embodiment of the present disclosure.
Fig. 3 is a view when an indoor unit and the refrigeration unit body according to the first embodiment of the present disclosure are internally viewed from above.
Fig. 4 is a view when the refrigeration unit body according to the first embodiment of the present disclosure is internally viewed from a front side.
Fig. 5 is a view of the refrigeration unit body according to the first embodiment of the present disclosure is viewed from below.
Fig. 6 is a view when the refrigeration unit body according to the first embodiment of the present disclosure is internally viewed from a left side.
Fig. 7 is a view of a main body when a refrigeration unit body according to a modification example of the first embodiment of the present disclosure is viewed from below.
Fig. 8 is a view when a heat sink according to a second embodiment of the present disclosure is viewed from the left side.
Fig. 9 is a view when a heat sink according to a first modification example of the second embodiment of the present disclosure is viewed from the front side.
Fig. 10 is a view of a refrigeration unit body according to a second modification example of the second embodiment of the present disclosure is viewed from below.
Fig. 11 is a view when a heat sink according to a third embodiment of the present disclosure is viewed from the left side.
Fig. 12 is a view when a refrigeration unit body according to a modification example of the third embodiment of the present disclosure is viewed from below.
Fig. 13 is a view when a heat sink according to a fourth embodiment of the present disclosure is viewed from the left side.

### Description of Embodiments

### <First Embodiment>

### (Refrigerated Vehicle)

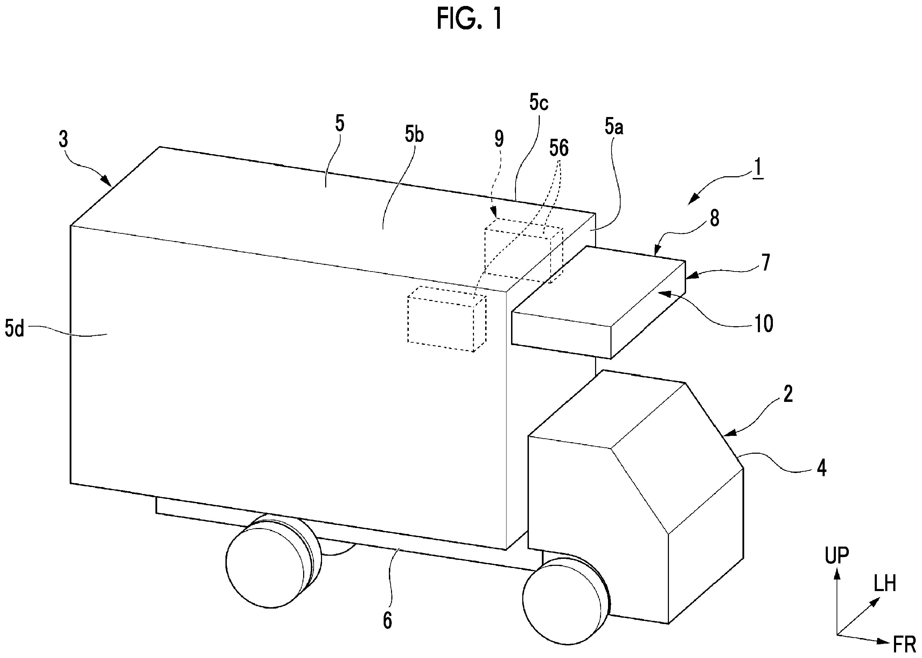

Hereinafter, a refrigerated vehicle 1 according to a first embodiment of the present disclosure will be described with reference to Figs. 1 to 6.

As illustrated in Fig. 1, the refrigerated vehicle 1 includes a tractor 2, a trailer 3, and a transport refrigeration unit 7.

Hereinafter, a vertically upward-downward direction will be simply referred to as an "upward-downward direction", one of directions perpendicular to the upward-downward direction will be referred to as a "forward-rearward direction", and a direction perpendicular to the upward-downward direction and the forward-rearward direction will be referred to as a "rightward-leftward direction". An orientation of the refrigerated vehicle 1 coincides with the forward-rearward direction. The forward, rearward, rightward, and leftward are determined with reference to a driver's seat of the refrigerated vehicle 1.

The tractor 2 includes a cab 4 serving as the driver's seat, and runs by using a traveling engine (not illustrated). The tractor 2 pulls the trailer 3.

The trailer 3 includes a trailer body 5 and a chassis 6.

The trailer body 5 is a box-shaped container supported from below by the chassis 6. The trailer body 5 extends in the forward-rearward direction. A space for accommodating a cargo (not illustrated) is formed inside the trailer body **5.**

The trailer body 5 includes a front wall 5a disposed on the tractor 2 side, a top wall 5b connected to an upper end of the front wall 5a, a left wall 5c connected to a left end of the front wall 5a and a left end of the top wall 5b, and a right wall 5d connected to a right end of the front wall 5a and a right end of the top wall 5b.

### (Transport Refrigeration Unit)

The transport refrigeration unit 7 includes a refrigeration unit body 8 and an indoor unit 9.

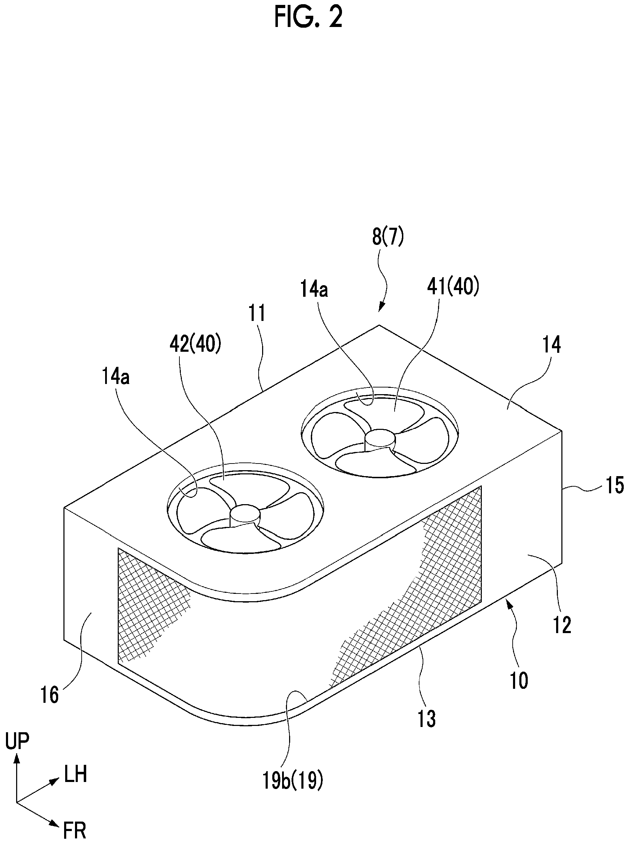

The refrigeration unit body 8 is disposed on an outer side of the trailer body **5.** The refrigeration unit body 8 is fixed to an upper portion of a front surface of the front wall 5a of the trailer body **5.** As illustrated in Figs. 2 to 4, the refrigeration unit body 8 includes a casing 10, an accumulator 53, a compressor 51, a fan 40, an outdoor heat exchanger 52, a receiver 54, an electric box 20, and a heat sink 30. A space for accommodating devices forming the refrigeration unit body 8 is formed inside the casing 10.

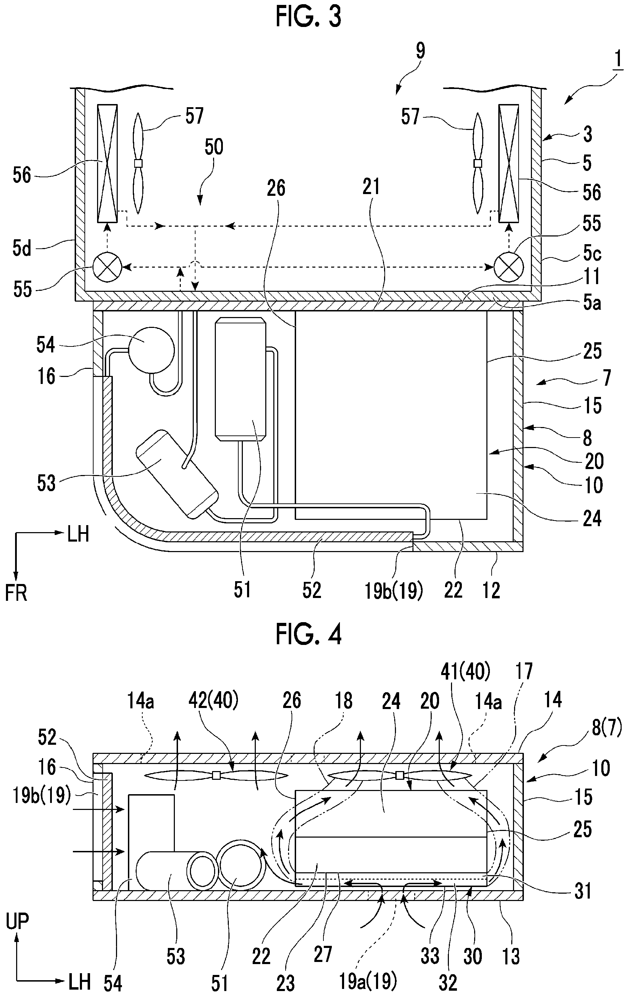

As illustrated in Fig. 3, the indoor unit 9 includes an expansion valve 55, an indoor heat exchanger 56, and an indoor fan 57.

A cooling cycle 50 of the transport refrigeration unit 7 includes the accumulator 53, the compressor 51, the outdoor heat exchanger 52, the receiver 54, the expansion valve 55, the indoor heat exchanger 56, and the indoor fan 57.

The accumulator 53 is accommodated inside the casing 10. The accumulator 53 is connected to the indoor heat exchanger 56 in a state where a refrigerant passing through the inside of the indoor heat exchanger 56 can be received.

The compressor 51 is accommodated inside the casing 10, and is connected to the accumulator 53. The compressor 51 compresses a gas-phase refrigerant supplied from the accumulator 53.

The fan 40 is accommodated inside the casing 10. The fan 40 takes air into the casing 10, and discharges the air inside the casing 10 to the outside.

The outdoor heat exchanger 52 is accommodated inside the casing 10. The outdoor heat exchanger 52 is connected to the compressor 51 in a state where the refrigerant compressed by the compressor 51 can be received. The outdoor heat exchanger 52 is a condenser that uses outside air taken into the casing 10 by the fan 40 to cool and condense the gas-phase refrigerant supplied from the compressor 51. The gas-phase refrigerant supplied from the compressor 51 is changed to a liquid-phase refrigerant by the outdoor heat exchanger 52. The outdoor heat exchanger 52 is connected to the receiver 54 in a state where the cooled refrigerant can be supplied to the receiver 54.

The receiver 54 is accommodated inside the casing 10. The receiver 54 temporarily stores the liquid-phase refrigerant supplied from the outdoor heat exchanger 52, and absorbs fluctuations in a flow rate of the refrigerant in the cooling cycle 50. The receiver 54 is connected to the expansion valve 55 in a state where the stored liquid-phase refrigerant can be supplied.

The expansion valve 55 is accommodated inside the trailer body 5. The expansion valves 55 are provided one by one on a left side and a right side inside the trailer body 5. The two expansion valves 55 are disposed at symmetrical positions when viewed from above, and have the same configuration. Hereinafter, the expansion valve 55 on the left side in the two expansion valves 55 will be described, and the expansion valve 55 on the right side will be omitted in the description.

The expansion valve 55 is disposed in an upper portion (portion close to the top wall 5b) of a corner portion formed by the left wall 5c and the front wall 5a. The expansion valve 55 expands (decompresses) the liquid-phase refrigerant supplied from the receiver 54. The expansion valve 55 is connected to the indoor heat exchanger 56 in a state where the expanded liquid-phase refrigerant can be supplied to the indoor heat exchanger 56.

The indoor heat exchanger 56 is accommodated inside the trailer body 5. The indoor heat exchangers 56 are provided one by one on the left side and the right side inside the trailer body 5. The two indoor heat exchangers 56 are disposed at symmetrical positions when viewed from above, and have the same configuration. Hereinafter, the indoor heat exchanger 56 on the left side in the two indoor heat exchangers 56 will be described, and the indoor heat exchanger 56 on the right side will be omitted in the description.

The indoor heat exchanger 56 is disposed close to the expansion valve 55. The indoor heat exchanger 56 is an evaporator that evaporates the liquid-phase refrigerant by exchanging heat between the air around the indoor heat exchanger 56 and the liquid-phase refrigerant supplied from the expansion valve 55. The gas-phase refrigerant supplied from the expansion valve 55 is changed to the liquid-phase refrigerant by the indoor heat exchanger 56. In this case, the heat of the air around the indoor heat exchanger 56 is absorbed by the refrigerant. In this way, the air around the indoor heat exchanger 56 is cooled.

The indoor fan 57 is accommodated inside the trailer body 5. The indoor fans 57 are provided one by one on the left side and the right side inside the trailer body 5. The two indoor fans 57 are disposed at symmetrical positions when viewed from above, and have the same configuration. Hereinafter, the indoor fan 57 on the left side of the two indoor fans 57 will be described, and the indoor fan 57 on the right side will be omitted in the description.

The indoor fan 57 is disposed close to the indoor heat exchanger 56. The indoor fan 57 circulates the air cooled by the indoor heat exchanger 56 inside the trailer body 5 to cool the inside of the trailer body **5.**

### (Details of Refrigeration Unit Body)

Hereinafter, details of the refrigeration unit body 8 will be described with reference to Figs. 2 to 6.

### (Casing)

As illustrated in Figs. 2 to 6, the casing 10 is formed in a cubic shape. The casing 10 includes a back surface plate 11 fixed to a front surface of the front wall 5a of the trailer body 5, a front surface plate 12 disposed to face the back surface plate 11 in the forward-rearward direction, a lower surface plate 13 connected to lower ends of the back surface plate 11 and the front surface plate 12, an upper surface plate 14 connected to the back surface plate 11 and an upper end of the front surface plate 12, and a left surface plate 15 and a right surface plate 16 which are disposed to face each other in the rightward-leftward direction and are connected to the back surface plate 11, the front surface plate 12, the lower surface plate 13, and the upper surface plate 14. In addition, the casing 10 is provided with an intake port 19 which can introduce the outside air into the casing 10. The intake port 19 includes a cooling intake port 19a and a main intake port 19b.

The casing 10 is formed in a thin shape in the upward-downward direction. For example, the casing 10 is formed such that a height in the upward-downward direction has a ratio of 50% or lower, compared to a width in the rightward-leftward direction and a depth in the forward-rearward direction.

A plate thickness direction of the lower surface plate 13 coincides with the upward-downward direction. The lower surface plate 13 is provided with a cooling intake port 19a penetrating the lower surface plate 13 and introducing the air into the casing 10. The cooling intake port 19a is formed in a rectangular elongated hole shape in which in the forward-rearward direction is set as a longitudinal direction.

The lower surface plate 13 is formed integrally with the back surface plate 11, and is formed in an L-shape when viewed in the rightward-leftward direction together with the back surface plate 11. The lower surface plate 13 together with the back surface plate 11 functions as a main frame that supports an object accommodated inside the casing 10.

The plate thickness direction of the upper surface plate 14 coincides with the upward-downward direction. The upper surface plate 14 is provided with two discharge ports 14a penetrating the upper surface plate 14 and discharging the air from the inside to the outside of the casing 10. The two discharge ports 14a are provided on the left side and the right side of the upper surface plate 14. The discharge port 14a on the left side is provided to face the cooling intake port 19a in the upward-downward direction. The discharge port 14a penetrates the upper surface plate 14 in the upward-downward direction. The discharge port 14a is formed in a circular shape when viewed in the upward-downward direction.

The front surface plate 12 and the right surface plate 16 are provided with the main intake port 19b for introducing the air into the casing 10. The main intake port 19b is formed in an L-shape when viewed in the upward-downward direction, and continuously extends from the front surface plate 12 throughout the right surface plate 16. The main intake port 19b penetrates the front surface plate 12 and the right surface plate 16. In addition, a wire net is mounted on the main intake port 19b (refer to Fig. 2).

The accumulator 53, the compressor 51, the receiver 54, the electric box 20, the heat sink 30, the outdoor heat exchanger 52, and the fan 40 are accommodated inside the casing 10 described above. More specifically, the accumulator 53, the compressor 51, and the receiver 54 are provided in a space on the right side inside the casing 10. The electric box 20 and the heat sink 30 are provided in a space on the left side inside the casing 10. In addition, the outdoor heat exchanger 52 is provided at a position facing the main intake port 19b inside the casing 10, and the fan 40 is provided at a position facing the discharge port 14a inside the casing 10.

### (Electric Box)

The electric box 20 is disposed between the cooling intake port 19a and the discharge port 14a on the left side. A space which can accommodate various devices is formed inside the electric box 20. The electric box 20 accommodates electric components (not illustrated) such as a power source of an inverter or a converter and power drive system components. The electric box 20 includes a back plate 21 disposed to face the back surface plate 11 of the casing 10, a front plate 22 disposed to face the back plate 21 in the forward-rearward direction, a lower plate 23 connected to the lower end of the back plate 21 and the front plate 22, an upper plate 24 connected to the back plate 21 and the upper end of the front plate 22, and a left plate 25 and a right plate 26 which are disposed to face each other in the rightward-leftward direction and connected to the back plate 21, the front plate 22, the lower plate 23, and the upper plate 24.

The lower plate 23 is disposed in a state of floating upward from the lower surface plate 13 of the casing 10. The lower plate 23 is disposed to cover the cooling intake port 19a of the casing 10. The lower plate 23 is formed in a rectangular plate shape in which the forward-rearward direction is set as the longitudinal direction.

The heat of the electric component accommodated inside the electric box 20 is transferred to the lower plate 23. Therefore, a lower surface of the lower plate 23 is provided at a position facing the cooling intake port 19a, and becomes a cooling target surface 27 cooled in such a manner that the air introduced into the casing 10 through the cooling intake port 19a is blown to cooling target surface 27. A region including a center of the cooling target surface 27 is provided to overlap the cooling intake port 19a when viewed in a direction facing the cooling intake port 19a.

The upper plate 24 is formed in a rectangular plate shape, and is disposed to be inclined downward as the upper plate 24 is directed forward.

Rear end portions of the left plate 25 and the right plate 26 are fixed to the back surface plate 11 of the casing 10 by a fixing member (not illustrated). Front end portions of the left plate 25 and the right plate 26 are fixed to the lower surface plate 13 of the casing 10 by a fixing member (not illustrated).

### (Heat Sink)

The heat sink 30 is provided to be interposed between the cooling target surface 27 of the electric box 20 and the cooling intake port 19a of the casing 10. A central portion of the heat sink 30 in the rightward-leftward direction faces the cooling intake port 19a. The heat sink 30 includes a cooling plate 31 and a plurality of fins 32.

The cooling plate 31 is provided along the cooling target surface 27 of the electric box 20. The cooling plate 31 is fixed to the electric box 20 in a state where the upper surface is in close contact with the cooling target surface 27.

The plurality of fins 32 are arranged to protrude from the cooling plate 31 and to extend along the cooling plate 31. An extending direction of the fin 32 coincides with the rightward-leftward direction. That is, the extending direction of the fin 32 is orthogonal to the longitudinal direction of the cooling intake port 19a. Each of the fins 32 linearly extends in the rightward-leftward direction.

A dimension in an arrangement direction (forward-rearward direction) of the fin group 33 including the plurality of fins 32 is larger than a dimension of the cooling intake port 19a in the longitudinal direction.

### (Outdoor Heat Exchanger)

The outdoor heat exchanger 52 is provided between the electric box 20 and the main intake port 19b. The outdoor heat exchanger 52 is formed to have the same shape as the main intake port 19b when viewed in the upward-downward direction. For example, the outdoor heat exchanger 52 is formed in an L-shape when viewed in the upward-downward direction. The outdoor heat exchanger 52 exchanges the heat between the air introduced from the main intake port 19b and the refrigerant flowing through the cooling cycle 50.

### (Fan)

The fan 40 is provided on a side opposite to the cooling target surface 27 of the electric box 20. The fan 40 discharges the air inside the casing 10 to the outside. The fan 40 includes a first fan 41 disposed to face the discharge port 14a on the left side in the two discharge ports 14a of the casing 10, and a second fan 42 disposed to face the discharge port 14a on the right side. A direction of an axis of the fan 40 coincides with the upward-downward direction.

The first fan 41 is provided on a side opposite to the cooling intake port 19a with the electric box 20 interposed therebetween.

The second fan 42 faces the accumulator 53, the compressor 51, and the receiver 54.

Here, a left end side of the fin 32 in the extending direction will be referred to as a first end side, and a right end side of the fin 32 in the extending direction will be referred to as a second end side. The casing 10 internally includes a first flow path 17 through which a region on the first end side of the fin 32 in the extending direction communicates with the first fan 41, and a second flow path 18 through which a region on the second end side of the fin 32 in the extending direction communicates with the first fan 41.

### (Operational Effects)

In the above-described transport refrigeration unit 7, the electric box 20 is cooled in the following procedure.

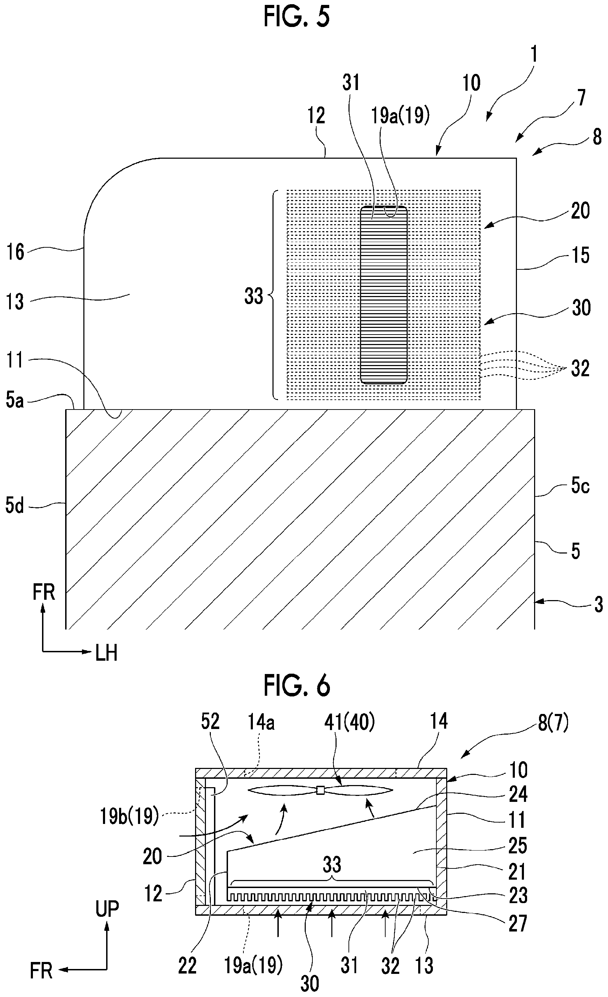

As illustrated in Figs. 4 and 6, when the fan 40 is operated, the air inside the casing 10 is discharged to the outside, and the air is introduced into the casing 10 through the intake port 19.

Cooling is performed by causing the air introduced into the casing 10 from the cooling intake port 19a in the intake port 19 to pass through the fins 32. The air blown to the cooling plate 31 flows along the fins 32 toward both end portions of the fin 32 in the extending direction, and is guided to the first flow path 17 or the second flow path 18. The air guided to the first flow path 17 or the second flow path 18 flows to bypass the electric box 20. More specifically, the air flows along the left wall 5c or the right wall 5d of the electric box 20. Thereafter, the air flows along inclination of the upper plate 24 of the electric box 20, and is suctioned into the fan 40 disposed in the upper portion of the casing 10. The air introduced into the casing 10 from the cooling intake port 19a and bypassing the electric box 20 is mainly suctioned into the first fan 41 in the fan 40. The air suctioned into the fan 40 is discharged to the outside of the casing 10 through the discharge port 14a.

The heat generated by the electric components inside the electric box 20 is transferred to the air flowing around the electric box 20 described above via the cooling target surface 27 of the electric box 20 and the heat sink 30. In this way, the electric box 20 is cooled.

In the present embodiment, the casing 10 includes the cooling intake port 19a provided to face the cooling target surface 27 of the electric box 20 and to interpose the heat sink 30 together with the cooling target surface 27, and introducing the air into the casing 10. In this manner, the air introduced from the cooling intake port 19a passes through the fins 32 to perform cooling. After the air introduced from the cooling intake port 19a collides with the cooling plate 31, a portion to be cooled most can be efficiently cooled at a position where a flow velocity increases along the fins 32. Therefore, cooling performance of the electric box 20 can be improved, compared to when the air is introduced in a direction along the cooling plate 31.

In the present embodiment, the cooling intake port 19a is provided to overlap a region including the center of the cooling target surface 27 when viewed in a direction facing the cooling target surface 27. In this manner, the air can flow from the center of the cooling target surface 27 toward an outer edge of the cooling target surface 27. Therefore, it is possible to suppress a possibility that the cooling is biased inside the cooling target surface 27 as the cooling target surface 27 is directed from an upstream side to a downstream side. Therefore, the cooling performance of the electric box 20 can be improved.

In the present embodiment, the cooling intake port 19a is formed in an elongated hole shape in which a direction orthogonal to the extending direction of the fin 32 is set as the longitudinal direction. In this manner, the air can be supplied to the plurality of fins 32 without any bias. Therefore, the cooling performance of the electric box 20 can be improved.

In the present embodiment, the dimension in the arrangement direction of the fin group 33 including the plurality of fins 32 is larger than the dimension of the cooling intake port 19a in the longitudinal direction. In this manner, it is possible to suppress a possibility that the air introduced from the cooling intake port 19a flows while avoiding the fin group 33. Therefore, most of the air introduced from the cooling intake port 19a can flow along a portion between the fins 32. Therefore, the cooling performance of the electric box 20 can be improved.

In the present embodiment, the fan 40 that discharges the air inside the casing 10 to the outside is further provided on a side opposite to the cooling target surface 27 of the electric box 20. In this manner, it is possible to reduce a possibility that an air flow along the heat sink 30 is affected by air blowing of the fan 40. Therefore, after the air flows along the heat sink 30 and sufficiently absorbs the heat of the electric box 20 via the heat sink 30, the air can be discharged to the outside of the casing 10. Therefore, the cooling performance of the electric box 20 can be improved.

In the present embodiment, the casing 10 internally includes the first flow path 17 through which a region on the first end side of the fin 32 in the extending direction communicates with the first fan 41, and the second flow path 18 through which a region on the second end side on the side opposite to the first end side of the fin 32 in the extending direction communicates with the first fan 41. In this manner, the air after passing through the fins 32 can be discharged from both sides of the fin 32 in the extending direction. Therefore, a pressure loss of the air passing between the fins 32 can be reduced, and a flow rate of the air passing between the fins 32 can be increased. Therefore, the cooling performance of the electric box 20 can be improved.

### <First Modification Example of First Embodiment>

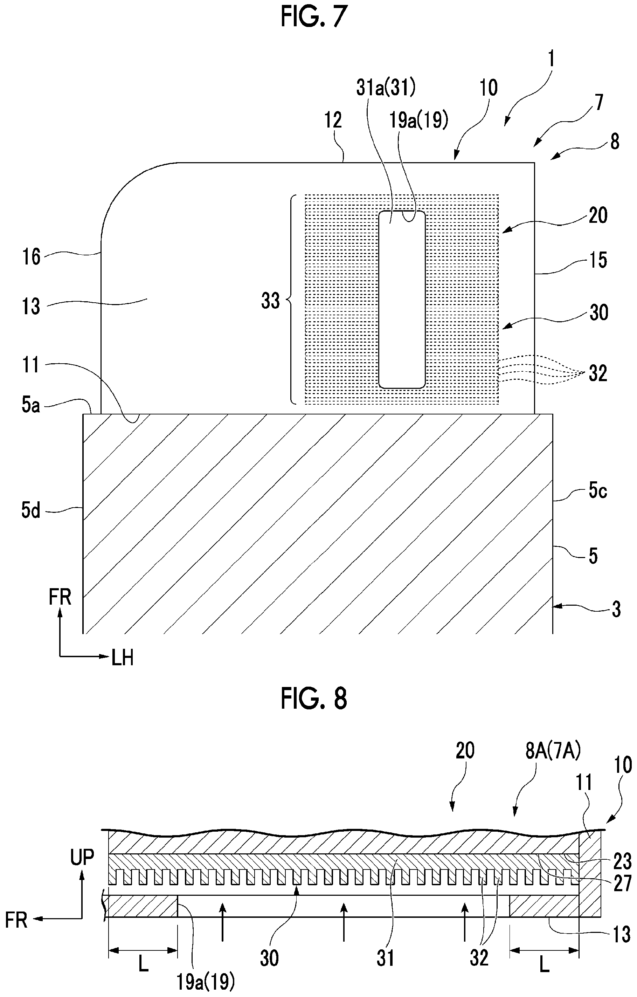

As illustrated in Fig. 7, a region facing the cooling intake port 19a in the cooling plate 31 of the heat sink 30 may be a fin non-forming region 31a in which the fins 32 are not formed. The fin non-forming region 31a is a rectangular region extending in the forward-rearward direction as in the cooling intake port 19a.

In the present modification example, the air introduced into the casing 10 from the cooling intake port 19a in the intake port 19 is mainly blown to the fin non-forming region 31a in the cooling plate 31, and thereafter, the air flows along the fins 32 to perform the cooling.

In the present modification example, the region facing the cooling intake port 19a in the heat sink 30 is the fin non-forming region 31a in which the fins 32 are not formed. In this manner, an air volume of the air along the cooling plate 31 can be increased by reducing ventilation resistance in the vicinity of the cooling intake port 19a. Therefore, the cooling performance of the electric box 20 can be improved.

### <Second Modification Example of First Embodiment>

In addition, although the main intake port 19b is provided from the front surface plate 12 throughout the right surface plate 16 and is formed in an L-shape when viewed in the upward-downward direction, the present disclosure is not limited thereto. For example, the main intake port 19b may be provided only in the front plate 22, and may be formed in an elongated hole shape extending in the rightward-leftward direction.

In the present modification example, a penetration direction of the main intake port 19b coincides with the forward-rearward direction. That is, the penetration direction of the main intake port 19b coincides with the arrangement direction (forward-rearward direction) of the fins 32. Therefore, the main intake port 19b can introduce air into the casing 10 in the arrangement direction of the fins 32. That is, an air flow direction in the outdoor heat exchanger 52 and a flow direction along the fins 32 are orthogonal to each other. In this manner, it is possible to suppress a possibility that the air warmed after passing through the outdoor heat exchanger 52 flowing into a portion between the plurality of fins 32. Therefore, relatively fresh air introduced from the cooling intake port 19a can flow to the heat sink 30 without causing the air warmed after passing through the outdoor heat exchanger 52 to flow to the heat sink 30. Therefore, the cooling performance of the electric box 20 can be improved by suppressing degradation in heat radiation performance of the heat sink 30.

### <Second Embodiment>

Hereinafter, a refrigeration unit body 8A of a transport refrigeration unit 7A according to a second embodiment of the present disclosure will be described with reference to Fig. 8. In the second embodiment, the same reference numerals will be assigned to configuration elements which are the same as those according to the first embodiment, and detailed description thereof will be omitted.

As illustrated in Fig. 8, in the second embodiment, the portion facing the fins 32 of the heat sink 30 in the lower surface plate 13 of the casing 10 is formed to be larger, compared to the first embodiment. That is, in the second embodiment, compared to the first embodiment, the cooling intake port 19a is formed such that an offset dimension L from a rear end of the heat sink 30 to a rear end of the cooling intake port 19a is larger than an offset dimension L from a front end of the heat sink 30 to a front end of the cooling intake port 19a. In this manner, it is possible to avoid a possibility that the air introduced into the casing 10 through the cooling intake port 19a escapes to the discharge port 14a without flowing into the heat sink 30.

### <First Modification Example of Second Embodiment>

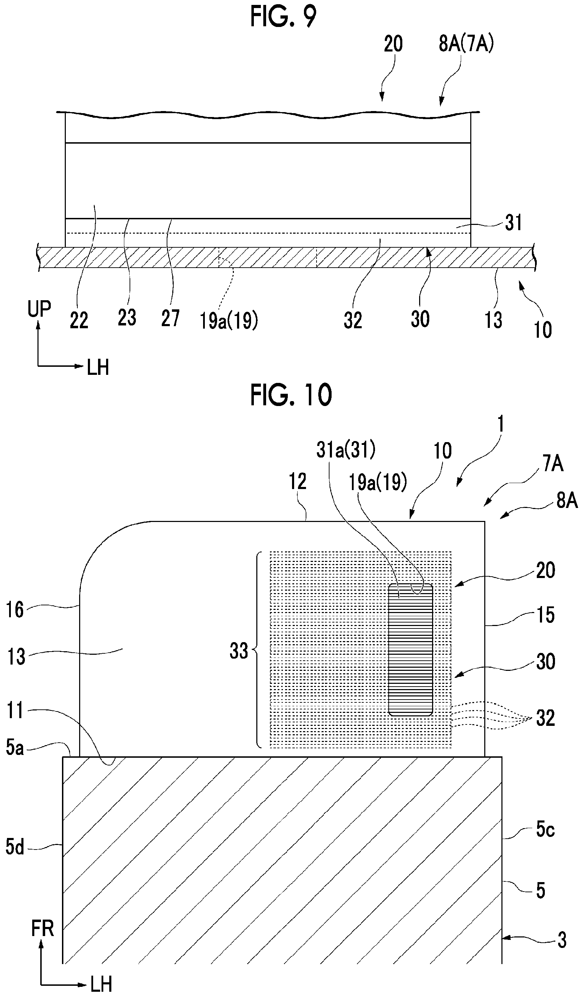

As illustrated in Fig. 9, in the cooling intake port 19a, the fin 32 may be in contact with the lower surface plate 13 of the casing 10. In this manner, it is possible to suppress a possibility that the air introduced into the casing 10 through the cooling intake port 19a leaks from the portion between the plurality of fins 32. Therefore, since a flow rate of the air flowing between the fins 32 can be increased, the cooling performance of the electric box 20 can be improved.

### <Second Modification Example of Second Embodiment>

In addition, as illustrated in Fig. 10, the cooling intake port 19a may be provided to be biased to the left with respect to the heat sink 30.

### <Third Embodiment>

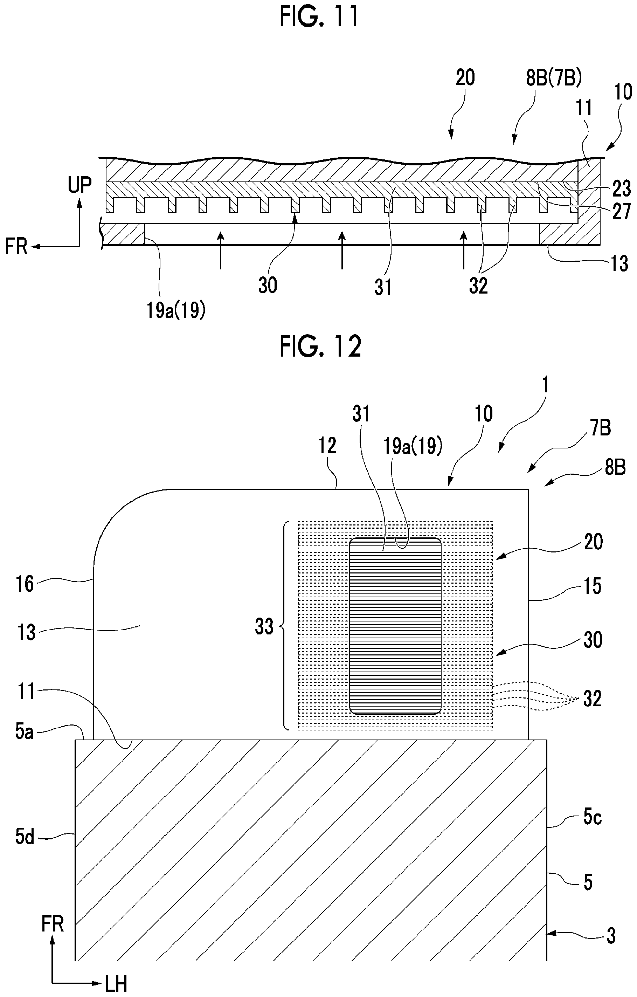

Hereinafter, a refrigeration unit body 8B of a transport refrigeration unit 7B according to a third embodiment of the present disclosure will be described with reference to Fig. 11. In the third embodiment, the same reference numerals will be assigned to configuration elements which are the same as those according to the first embodiment, and detailed description thereof will be omitted.

As illustrated in Fig. 11, an interval between the fins 32 of the third embodiment is larger than an interval between the fins 32 of the first embodiment. In this manner, an air volume of the air flowing between the fins 32 can be increased by reducing ventilation resistance of the fins 32.

### (Modification Example of Third Embodiment)

As illustrated in Fig. 12, the width of the cooling intake port 19a of the third embodiment in the rightward-leftward direction may be longer than the width of the cooling intake port 19a of the first embodiment in the rightward-leftward direction. That is, compared to the first embodiment, the cooling intake port 19a may be formed such that (aspect ratio) = (width in the rightward-leftward direction) / (depth in the upward-downward direction) in the cooling intake port 19a is larger.

### <Fourth Embodiment>

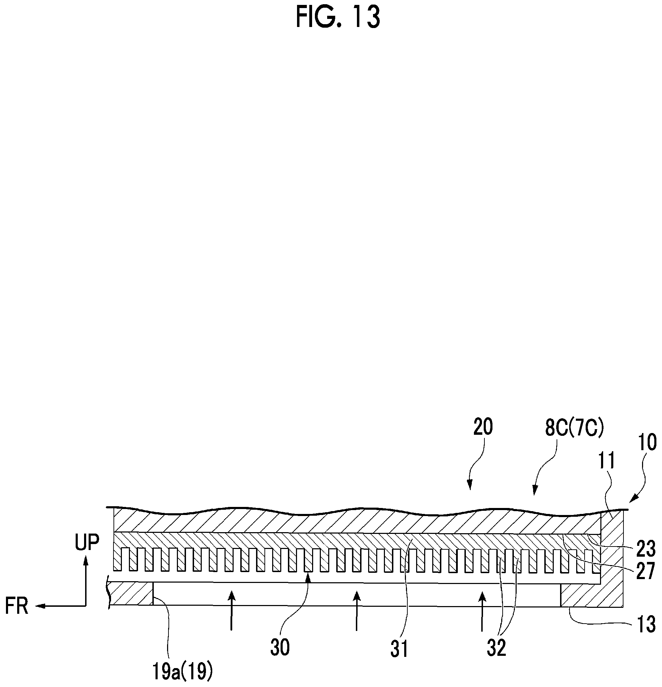

Hereinafter, a refrigeration unit body 8C of a transport refrigeration unit 7C according to a fourth embodiment of the present disclosure will be described with reference to Fig. 13. In the fourth embodiment, the same reference numerals will be assigned to configuration elements which are the same as those according to the first embodiment, and detailed description thereof will be omitted.

As illustrated in Fig. 13, a tooth height of the fin 32 of the fourth embodiment in the upward-downward direction is larger than a tooth height of the fin 32 of the first embodiment in the upward-downward direction. In this manner, a surface area of a portion exposed to cooling air in the heat sink 30 can be increased.

### (Other Embodiments)

Hitherto, the embodiments of the present disclosure have been described in detail with reference to the drawings. However, a specific configuration is not limited to the embodiments, and includes design changes within the scope not departing from the concept of the present disclosure.

In the above-described embodiment, the upper plate 24 is provided with the two discharge ports 14a that discharges the air from the inside to the outside of the casing 10. However, without being limited thereto, the number of the discharge ports 14a can be changed as appropriate. In addition, a position for forming the discharge port 14a can be changed as appropriate. For example, when viewed in the upward-downward direction, only one discharge port 14a may be provided at the center of the upper plate 24. In this case, only one fan 40 is provided inside the casing 10.

In addition, the discharge port 14a and the fan 40 may be biased to the outdoor heat exchanger 52 side in the rightward-leftward direction. That is, the fan 40 may include only the second fan 42. In this case, the air warmed after passing through the outdoor heat exchanger 52 is discharged without flowing between the fins 32 of the heat sink 30.

In the above-described embodiment, the fin 32 linearly extends in the rightward-leftward direction along the cooling plate 31. However, the present invention is not limited thereto. For example, the fin 32 may extend in one direction while being curved, or may extend in a zigzag shape.

In addition, the fin 32 may linearly extend in the forward-rearward direction. In this case, the cooling intake port 19a is formed in an elongated hole shape extending in the rightward-leftward direction. The extending direction of the fin 32 and the longitudinal direction of the cooling intake port 19a may be orthogonal to each other.

In the above-described embodiment, only one cooling intake port 19a is formed. However, the present invention is not limited thereto. The number of the cooling intake ports 19a can be changed as appropriate.

### Industrial Applicability

The present disclosure relates to a transport refrigeration unit. According to the present disclosure, cooling performance of an electric box can be improved. Reference Signs List

- 1:: Refrigerated vehicle
- 2:: Tractor
- 3:: Trailer
- 4:: Cab
- 5:: Trailer body
- 5a:: Front wall
- 5b:: Top wall
- 5c:: Left wall
- 5d:: Right wall
- 6:: Chassis
- 7, 7A, 7B, 7C:: Transport refrigeration unit
- 8, 8A, 8B, 8C:: Refrigeration unit body
- 9:: Indoor unit

- 10:: Casing
- 11:: Back surface plate
- 12:: Front surface plate
- 13:: Lower surface plate
- 14:: Upper surface plate
- 14a:: Discharge port
- 15:: Left surface plate
- 16:: Right surface plate
- 17:: First flow path
- 18:: Second flow path
- 19:: Intake port
- 19a:: Cooling intake port
- 19b:: Main intake port
- 20:: Electric box
- 21:: Back plate
- 22:: Front plate
- 23:: Lower plate
- 24:: Upper plate
- 25:: Left plate
- 26:: Right plate
- 27:: Cooling target surface
- 30:: Heat sink
- 31:: Cooling plate
- 31a:: Fin non-forming region
- 32:: Fin

- 33:: Fin group
- 40:: Fan
- 41:: First fan
- 42:: Second fan
- 50:: Cooling cycle
- 51:: Compressor
- 52:: Outdoor heat exchanger
- 53:: Accumulator
- 54:: Receiver
- 55:: Expansion valve
- 56:: Indoor heat exchanger
- 57:: Indoor fan
- L:: Offset dimension

## Claims

1. A transport refrigeration unit (7) comprising:
a casing (10);
an electric box (20) provided inside the casing (10) and accommodating an electric component; and
a heat sink (30) including a cooling plate (31) provided along a cooling target surface (27) of the electric box (20), and a plurality of fins (32) arranged to protrude from the cooling plate (31) and to extend along the cooling plate (31),
wherein the casing (10) includes a cooling intake port (19a) that is provided to face the cooling target surface (27) and to interpose the heat sink (30) together with the cooling target surface (27), and that introduces air into the casing (10) , and
a discharge port (14a) discharging the air from an inside to an outside of the casing (10), **characterized in that** the transport refrigeration unit (7) further comprises:
a fan (40) that discharges the air inside the casing (10) to an outside on a side opposite to the cooling target surface (27) of the electric box (20).
the fan (40) includes a first fan (41) provided on a side opposite to the cooling intake port (19a) with the electric box (20) interposed therebetween and disposed to face the discharge port (14a),
the casing (10) internally includes a first flow path through which a region on a first end side in an extending direction of the fins (32) communicates with the fan (40), and a second flow path through which a region on a second end side opposite to the first end side in the extending direction of the fins (32) communicates with the fan (40),
cooling is performed by causing the air introduced into the casing (10) from the cooling intake port (19a) to pass through the fins (32),
the air blown to the cooling plate (31) flows along the fins (32) toward both end portions of the fin (32) in the extending direction, that are a first end on the first end side and a second end on the second end side, and is guided to the first flow path (17) or the second flow path (18), and
the air guided to the first flow path (17) or the second flow path (18) flows to bypass the electric box (20), suctioned into the first fan (41) in the fan (40) and discharged to the outside of the casing (10) through the discharge port (14a).

2. The transport refrigeration unit (7) according to Claim 1,
wherein the cooling intake port (19a) is provided to overlap a region including a center of the cooling target surface (27) when viewed in a direction facing the cooling target surface (27).

3. The transport refrigeration unit (7) according to Claim 1 or 2,
wherein a region facing the cooling intake port (19a) in the heat sink (30) is a fin non-forming region (31a) in which the fins (32) are not formed.

4. The transport refrigeration unit (7) according to any one of Claims 1 to 3,
wherein the cooling intake port (19a) is formed in an elongated hole shape in which a direction orthogonal to an extending direction of the fins (32) is set as a longitudinal direction.

5. The transport refrigeration unit (7) according to Claim 4,
wherein a dimension in an arrangement direction of a fin group (33) including the plurality of fins (32) is larger than a dimension in the longitudinal direction of the cooling intake port (19a).

6. The transport refrigeration unit (7) according to any one of Claims 1 to 5,
wherein the casing (10) includes a main intake port (19b) introducing air into the casing (10) in an arrangement direction of the fins (32), and
the transport refrigeration unit (7) further comprises an outdoor heat exchanger (52) that exchanges heat with the air introduced from the main intake port (19b) between the electric box (20) and the main intake port (19b).

## Patentansprüche

1. Transportkühleinheit (7), umfassend:
ein Gehäuse (10),
einen Elektrokasten (20), der innerhalb des Gehäuses (10) bereitgestellt ist und eine elektrische Komponente aufnimmt, und
einen Kühlkörper (30), der eine Kühlplatte (31), die entlang einer Kühlungszielfläche (27) des Elektrokastens (20) bereitgestellt ist, und mehrere Finnen (32), die so angeordnet sind, dass sie von der Kühlplatte (31) abstehen und sich entlang der Kühlplatte (31) erstrecken, beinhaltet,
wobei das Gehäuse (10) einen Kühleinlassport (19a) beinhaltet, der so bereitgestellt ist, dass er der Kühlzielfläche (27) zugewandt ist und den Kühlkörper (30) zwischen sich und der Kühlzielfläche (27) aufnimmt und Luft in das Gehäuse (10) einlässt, und
einen Auslassport (14a) beinhaltet, der die Luft aus dem Inneren des Gehäuses (10) nach außerhalb des Gehäuses (10) auslässt,
**dadurch gekennzeichnet, dass** die Transportkühleinheit (7) ferner umfasst:
ein Gebläse (40), das die Luft im Inneren des Gehäuses (10) auf einer der Kühlzielfläche (27) des Elektrokastens (20) gegenüberliegenden Seite nach draußen bläst,
wobei der Lüfter (40) einen ersten Lüfter (41) beinhaltet, der auf einer Seite gegenüber dem Kühleinlassport (19a) bereitgestellt ist, wobei der Elektrokasten (20) dazwischen angeordnet ist und so angeordnet ist, dass er dem Auslassport (14a) zugewandt ist,
wobei das Gehäuse (10) im Inneren einen ersten Strömungspfad, durch den eine Region auf einer ersten Endseite in einer Erstreckungsrichtung der Finnen (32) mit dem Lüfter (40) in Strömungsverbindung steht, und einen zweiten Strömungspfad, durch den eine Region auf einer zweiten Endseite gegenüber der ersten Endseite in der Erstreckungsrichtung der Finnen (32) mit dem Lüfter (40) in Strömungsverbindung steht, beinhaltet,
wobei die Kühlung erfolgt, indem veranlasst wird, dass die von dem Kühleinlassport (19a) in das Gehäuse (10) eingeleitete Luft durch die Finnen (32) geleitet wird,
wobei die zu der Kühlplatte (31) geblasene Luft entlang der Finnen (32) in der Erstreckungsrichtung zu beiden Endabschnitten der Finne (32), das heißt, einem ersten Ende auf der ersten Endseite und einem zweiten Ende auf der zweiten Endseite, hin strömt und zu dem ersten Strömungspfad (17) oder dem zweiten Strömungspfad (18) geleitet wird, und
wobei die zu dem ersten Strömungspfad (17) oder dem zweiten Strömungspfad (18) geleitete Luft so strömt, dass sie den Elektrokasten (20) umgeht, in den ersten Lüfter (41) in dem Lüfter (40) gesaugt wird und durch den Auslassport (14a) nach außerhalb des Gehäuses (10) abgegeben wird.

2. Transportkühleinheit (7) nach Anspruch 1,
wobei der Kühleinlassport (19a) so bereitgestellt ist, dass er eine Region überlappt, die - beim Blick in einer Richtung auf die Kühlungszielfläche (27) - eine Mitte der Kühlungszielfläche (27) beinhaltet.

3. Transportkühleinheit (7) nach Anspruch 1 oder 2,
wobei eine Region, die dem Kühleinlassport (19a) in dem Kühlkörper (30) zugewandt ist, eine finnenfreie Region (31a) ist, in der keine Finnen (32) gebildet sind.

4. Transportkühleinheit (7) nach einem der Ansprüche 1 bis 3,
wobei der Kühleinlassport (19a) in einer Langlochform gebildet ist, wobei eine Richtung orthogonal zu der Erstreckungsrichtung der Finnen (32) als eine Längsrichtung festgelegt ist.

5. Transportkühleinheit (7) nach Anspruch 4,
wobei eine Abmessung in einer Anordnungsrichtung einer Finnengruppe (33), die die mehreren Finnen (32) beinhaltet, größer ist als eine Abmessung in der Längsrichtung des Kühleinlassports (19a).

6. Transportkühleinheit (7) nach einem der Ansprüche 1 bis 5,
wobei das Gehäuse (10) einen Haupteinlassport (19b) beinhaltet, der Luft in das Gehäuse (10) in einer Anordnungsrichtung der Finnen (32) einlässt, und
wobei die Transportkühleinheit (7) ferner einen Außenwärmetauscher (52) umfasst, der Wärme mit der Luft tauscht, die von dem Haupteinlassport (19b) zwischen dem Elektrokasten (20) und dem Haupteinlassport (19b) zugeführt wird.

## Revendications

1. Unité de réfrigération de transport (7) comprenant :
un carter (10) ;
une boîte électrique (20) prévue à l'intérieur du carter (10) et logeant un composant électrique ; et
un dissipateur de chaleur (30) comprenant une plaque de refroidissement (31) prévue le long d'une surface de refroidissement cible (27) de la boîte électrique (20) et une pluralité d'ailettes (32) agencées pour faire saillie de la plaque de refroidissement (31) et pour s'étendre le long de la plaque de refroidissement (31),
dans laquelle le carter (10) comprend un orifice d'admission de refroidissement (19a) qui est prévu pour faire face à la surface de refroidissement cible (27) et pour intercaler le dissipateur de chaleur (30) avec la surface de refroidissement cible (27), et qui introduit l'air dans le carter (10), et
un orifice de décharge (14a) déchargeant l'air d'un intérieur vers un extérieur du carter (10),
**caractérisée en ce que** :
l'unité de réfrigération de transport (7) comprend en outre :
un ventilateur (40) qui décharge l'air à l'intérieur du carter (10) vers un extérieur sur un côté opposé à la surface de refroidissement cible (27) de la boîte électrique (20),
le ventilateur (40) comprend un premier ventilateur (41) prévu sur un côté opposé à l'orifice d'admission de refroidissement (19a) avec la boîte électrique (20) intercalée entre eux et disposée pour faire face à l'orifice de décharge (14a),
le carter (10) comprend, de manière interne, une première trajectoire d'écoulement à travers laquelle une région sur un premier côté d'extrémité dans une direction d'extension des ailettes (32) communique avec le ventilateur (40) et une deuxième trajectoire d'écoulement à travers laquelle une région sur un deuxième côté d'extrémité opposé au premier côté d'extrémité dans la direction d'extension des ailettes (32) communique avec le ventilateur (40),
le refroidissement est réalisé en amenant l'air introduit dans le carter (10) depuis l'orifice d'admission de refroidissement (19a) à passer à travers les ailettes (32),
l'air soufflé vers la plaque de refroidissement (31) s'écoule le long des ailettes (32) vers les deux parties d'extrémité de l'ailette (32) dans la direction d'extension, qui sont une première extrémité sur le premier côté d'extrémité et une deuxième extrémité sur le deuxième côté d'extrémité, et est guidé vers la première trajectoire d'écoulement (17) ou la deuxième trajectoire d'écoulement (18), et
l'air guidé vers la première trajectoire d'écoulement (17) ou la deuxième trajectoire d'écoulement (18) s'écoule pour contourner la boîte électrique (20), aspiré dans le premier ventilateur (41) dans le ventilateur (40) et déchargé à l'extérieur du carter (10) par l'orifice de décharge (14a).

2. Unité de réfrigération de transport (7) selon la revendication 1, dans laquelle l'orifice d'admission de refroidissement (19a) est prévu pour recouvrir une région comprenant un centre de la surface de refroidissement cible (27) lorsqu'il est observé dans une direction faisant face à la surface de refroidissement cible (27).

3. Unité de réfrigération de transport (7) selon la revendication 1 ou 2,
dans laquelle une région faisant face à l'orifice d'admission de refroidissement (19a) dans le dissipateur de chaleur (30) est une région sans formation d'ailettes (31a) dans laquelle les ailettes (32) ne sont pas formées.

4. Unité de réfrigération de transport (7) selon l'une quelconque des revendications 1 à 3,
dans laquelle l'orifice d'admission de refroidissement (19a) est formé dans une forme de trou allongé dans laquelle une direction orthogonale à une direction d'extension des ailettes (32) est déterminée comme étant une direction longitudinale.

5. Unité de réfrigération de transport (7) selon la revendication 4, dans laquelle une dimension dans une direction d'agencement d'un groupe d'ailettes (33) comprenant la pluralité d'ailettes (32) est plus grande qu'une dimension dans la direction longitudinale de l'orifice d'admission de refroidissement (19a).

6. Unité de réfrigération de transport (7) selon l'une quelconque des revendications 1 à 5,
dans laquelle le carter (10) comprend un orifice d'admission principal (19b) introduisant l'air dans le carter (10) dans une direction d'agencement des ailettes (32), et
l'unité de réfrigération de transport (7) comprend en outre un échangeur de chaleur extérieur (52) qui échange la chaleur avec l'air introduit par l'orifice d'admission principal (19b) entre la boîte électrique (20) et l'orifice d'admission principal (19b).
